# EUROPEAN PATENT APPLICATION

(11) **EP 3 968 695 A1**
(43) Date of publication of application: **16.03.2022**
(21) Application number: 20822911.2
(22) Date of filing: 10.06.2020
(51) Int. Cl.: H04W 36/00

(54) **METHOD AND APPARATUS FOR UPDATING OPERATOR INFORMATION**

(30) Priority: 10.06.2019 CN 201910497060
(71) Applicant: Huawei Technologies Co., Ltd., Longgang District Shenzhen, Guangdong 518129 (CN)
(72) Inventor: MENG, Xian, Shenzhen, Guangdong 518129 (CN); LIN, Meixin, Shenzhen, Guangdong 518129 (CN); QIAO, Yunfei, Shenzhen, Guangdong 518129 (CN)
(74) Representative: Gill Jennings & Every LLP
(86) International application number: PCT/CN2020/095397
(87) International publication number: WO 2020/249011

(57) **Abstract**

Embodiments of this application relate to an operator information update method and apparatus, to ensure that a satellite can continuously provide a service for a terminal due to a position change when the satellite runs. The operator information update method includes: a network device receives target operator information corresponding to a satellite; the network device sends the target operator information to the satellite, and the satellite receives the target operator information, corresponding to the satellite, that is sent by the network device; and the satellite updates stored operator information by using the target operator information.

## Description

### CROSS-REFERENCE TO RELATED APPLICATIONS

This application claims priority to Chinese Patent Application No. 201910497060.1, filed with the China National Intellectual Property Administration on June 10, 2019 and entitled "OPERATOR INFORMATION UPDATE METHOD AND APPARATUS", which is incorporated herein by reference in its entirety.

### TECHNICAL FIELD

The present invention relates to the field of wireless communications technologies, and in particular, to an operator information update method and apparatus.

### BACKGROUND

A typical satellite communications system includes a satellite gateway, a satellite, and a terminal. One or more satellite gateways are connected to a non-terrestrial network (Non-terrestrial network, NTN)/satellite network, an access network, a core network, and a public data network. One or more satellite gateways are connected to one satellite to provide services, to ensure continuous services and feeder links for the satellite between two successive satellite gateways, and ensure sufficient time to complete mobility anchoring and switching. Each satellite corresponds to one target coverage area, and provides a service for a terminal in the target coverage area corresponding to the satellite. A wireless connection between the satellite and a satellite gateway is implemented by using a feeder link, and a wireless connection between the terminal and the satellite is implemented by using a service link.

In the satellite communications system, a satellite usually moves along an orbit and moves relative to the ground. Consequently, a core network accessed by the satellite may vary with a position relative to the Earth. Therefore, if operator information broadcast by the satellite is preconfigured and fixed, the satellite is bound to an operator. After the satellite leaves a service range of the operator, the operator cannot provide a service for the satellite. If the satellite re-establishes a connection to a core network of a newly accessed operator each time, a large amount of signaling resources are consumed and a connection delay is long. In conclusion, the satellite cannot provide a service for the terminal due to a position change when the satellite runs.

### SUMMARY

Embodiments of this application provide an operator information update method and apparatus, so that a satellite updates operator information in time when the satellite runs and a position changes. This ensures that the satellite can continuously provide a service for a terminal when the satellite runs.

According to a first aspect, an operator information update method is provided, including:
a network device obtains target operator information corresponding to a satellite, and sends the target operator information to the satellite; and
the satellite receives the target operator information, corresponding to the satellite, that is sent by the network device, and updates stored operator information by using the target operator information.

When the satellite runs, the satellite performs network device switching. When the satellite is located at a position that cannot be covered by an operator network, the network device sends the target operator information corresponding to the satellite to the satellite in time, and the satellite updates, by using the obtained target operator information, the operator information stored in the satellite. In this way, the satellite accesses, in time, an operator network that can provide a service for the satellite. This ensures that another operator network can provide a service for the satellite in time. The satellite is decoupled from a core network. Each time the satellite implements operator network switching by using the network device, the satellite can update the operator information without interacting with the core network, and can directly implement operator network switching during network device switching. This reduces signaling overheads and reduces a delay in obtaining the operator information by the satellite. Therefore, the satellite can quickly access a core network accessed by a target network to which the satellite switches. This ensures that the satellite can continuously provide a service for a terminal when the satellite runs.

In a possible implementation, both a first network device from which the satellite switches and a second network device to which the satellite is to switch or to which the satellite switches may send the operator information to the satellite. The network device includes the first network device and/or the second network device, the first network device is a first network device/source network device from which the satellite switches, and the second network device is a second network device/target network device to which the satellite is to switch or to which the satellite switches.

In the implementation, if the satellite performs network device switching when the satellite runs, both the source network device and/or the target network device during switching may send corresponding operator information to the satellite. This ensures that the satellite can obtain the operator information from the network device in time and quickly access the core network.

In a possible implementation, the first network device may receive the target operator information, corresponding to the satellite, that is sent by the second network device, and the first network device may obtain the target operator information corresponding to the satellite from the second network device and send the target operator information to the satellite.

In the implementation, the first network device may obtain the target operator information corresponding to the satellite from the second network device, and then send the target operator information to the satellite. This ensures that the satellite can access the core network accessed by the target network device in time, and the core network provides a service for the satellite.

In a possible implementation, before receiving the target operator information, corresponding to the satellite, that is sent by the second network device, the first network device sends a first message to the second network device, where the first message carries identifier information of the satellite, and is used to request the target operator information corresponding to the satellite.

The first message may be a new message, or may a reused existing message. The first message may be a message carrying a new field, or may be a message carrying a reused field. If the first message is a reused existing message, the first message may be a handover request (HANDOVER REQUEST) message.

In the implementation, the first network device may actively request the target operator information corresponding to the satellite from the second network device by using the first message.

In a possible implementation, the first network device may send a second message carrying the target operator information to the satellite, and the satellite receives the second message that carries the target operator information and that is sent by the first network device, where the second message is an RRC message, or the second message is a new message.

If the second message is an RRC message, the second message may be an RRC reconfiguration (Reconfiguration) message.

In the implementation, if the first network device sends the target operator information to the satellite by using the RRC message, modification of signaling may be reduced. If the first network device sends the target operator information to the satellite by using the new message, a conflict may be avoided by preventing existing signaling from being used.

In a possible implementation, the first network device may send a third message to the satellite, where the third message is used to indicate the satellite to determine whether the operator information is updated; the satellite determines, based on the third message, to update the operator information, and sends, to the first network device, a fourth message used to obtain the operator information; and the first network device receives the fourth message, and sends the target operator information to the satellite.

The third message may be an RRC message. For example, the third message may be an RRC reconfiguration message.

In the implementation, because the operator information in the network device does not frequently change, the operator information stored in the satellite does not need to be updated most of the time. Therefore, after determining to update the operator information, the satellite sends, to the first network device, the message used to obtain the operator information, to reduce resource consumption.

In a possible implementation, the third message sent by the first network device includes version number information (CN INFO Version) of a target operator corresponding to the satellite and/or a latest update time (Update Time) of the target operator information. The satellite determines that whether the received version number information of the target operator and/or the latest update time of the target operator information are/is consistent with version number information of an operator and/or update time of the operator information that are/is stored in the satellite, to determine whether to update the operator information. When determining not to update the operator information, the satellite may not obtain the operator information from the first network device, to reduce resource consumption.

In a possible implementation, the second network device receives a correspondence, sent by a core network device, between the operator information and identifier information of the satellite; and searches, for the target operator information corresponding to the satellite, the correspondence between the operator information and the identifier information of the satellite. The second network device may obtain the correspondence, from the core network, between the operator information and the identifier information of the satellite, to obtain the target operator information corresponding to the satellite.

In the implementation, the second network device may obtain the target operator information corresponding to the satellite from the core network device, and then send the target operator information to the satellite. This ensures that the satellite can access, in time, the core network that can provide a service for the satellite and that is accessed by the target network device, and the core network provides the service for the satellite.

In a possible implementation, the second network device sends a fifth message carrying the target operator information to the satellite, and the satellite receives the fifth message carrying the target operator information.

The fifth message may be a new message, or may a reused existing message. The fifth message may be a message carrying a new field, or may be a message carrying a reused field.

In a possible implementation, the satellite sends a sixth message to the second network device, where the sixth message is used to request the operator information; and the second network device receives the sixth message and sends the target operator information to the satellite.

The sixth message may be an RRC message. For example, the sixth message may be an RRC reconfiguration complete message.

In a possible implementation, the operator information includes one or more of cell access information, system information scheduling information, radio resource configuration information, and cell selection and reselection information.

According to a second aspect, an operator information update method is provided, including:
a first network device receives target operator information, corresponding to a satellite, that is sent by a second network device, and sends the target operator information corresponding to the satellite to the satellite, where the first network device is a first network device from which the satellite switches, and the second network device is a second network device to which the satellite is to switch; and
the satellite receives the target operator information sent by the first network device, and updates stored operator information by using the target operator information.

In a possible implementation, before receiving the target operator information, corresponding to the satellite, that is sent by the second network device, the first network device may send a seventh message to the second network device, where the seventh message carries identifier information of the satellite, and is used to request the target operator information corresponding to the satellite.

In a possible implementation, the first network device may send an eighth message carrying the target operator information to the satellite, and the satellite receives the eighth message carrying the target operator information, where the eighth message may be an RRC message, or the eighth message may be a new message.

In a possible implementation, before sending the target operator information to the satellite, the first network device may send a ninth message to the satellite, where the ninth message is used to indicate the satellite to determine whether the operator information is updated; and the first network device receives a tenth message sent by the satellite, where the tenth message is used to obtain the operator information. Before receiving the target operator information, the satellite receives the ninth message, determines to update the operator information, and sends the tenth message to the first network device.

In a possible implementation, the ninth message includes version number information of a target operator corresponding to the satellite and/or a latest update time of the target operator information. If the satellite determines that the received version number information of the target operator and/or the latest update time of the target operator information are/is consistent with version number information of an operator and/or update time of the operator information that are/is stored in the satellite, the satellite determines to update the operator information.

According to a third aspect, an operator information update method is provided, including:
a second network device receives a correspondence, sent by a core network device, between operator information and identifier information of a satellite; searches the correspondence between the operator information and the identifier information of the satellite for target operator information corresponding to the satellite; and sends the target operator information to the satellite. The satellite receives the target operator information, and updates the stored operator information by using the target operator information.

In a possible implementation, the second network device sends an eleventh message carrying the target operator information to the satellite, and the satellite receives the eleventh message carrying the target operator information.

In a possible implementation, before sending the target operator information to the satellite, the second network device receives a twelfth message sent by the satellite, where the twelfth message is used to request the operator information. Before receiving the target operator information, the satellite sends the twelfth message to the second network device.

According to a fourth aspect, an operator information update apparatus is provided. The apparatus in this application has a function of implementing behavior of the network device or the satellite in the aspects of the foregoing methods, and includes corresponding means (means) configured to perform the steps or functions described in the aspects of the foregoing methods. The steps or functions may be implemented by using software, hardware (for example, a circuit), or a combination of hardware and software. The network device includes a first network device and/or a second network device.

In a possible design, the apparatus includes one or more processors and a communications unit. The one or more processors are configured to support the apparatus in executing corresponding functions of the network device or the satellite in the foregoing method.

Optionally, the apparatus may further include one or more memories. The memory is configured to be coupled to the processor, and the memory stores program instructions and/or data necessary for the apparatus. The one or more memories may be integrated with the processor, or may be disposed independent of the processor. This is not limited in this application.

In another possible design, the apparatus includes a transceiver, a processor, and a memory. The processor is configured to control the transceiver or an input/output circuit to send and receive a signal, the memory is configured to store a computer program, and the processor is configured to run the computer program in the memory, so that the apparatus performs the method completed by the network device or the satellite in any one of the first aspect or the possible implementations of the first aspect.

In a possible design, the apparatus includes one or more processors and a communications unit. The one or more processors are configured to support the apparatus in executing corresponding functions of the network device or the satellite in the foregoing method.

Optionally, the apparatus may further include one or more memories. The memory is configured to be coupled to the processor, and the memory stores program instructions and/or data necessary for the network device or the satellite. The one or more memories may be integrated with the processor, or may be disposed independent of the processor. This is not limited in this application.

The apparatus may be located in the network device or the satellite, or may be a network device or a satellite.

In another possible design, the apparatus includes a transceiver, a processor, and a memory. The processor is configured to control the transceiver or an input/output circuit to send and receive a signal, the memory is configured to store a computer program, and the processor is configured to run the computer program in the memory, so that the apparatus performs the method completed by the network device or the satellite in any one of the first aspect or the possible implementations of the first aspect.

According to a fifth aspect, a computer-readable storage medium is provided, configured to store a computer program, where the computer program includes instructions used to perform the method in any one of the first aspect, the second aspect, or the third aspect, or the possible implementations of the first aspect, the second aspect, or the third aspect.

According to a sixth aspect, a computer program product is provided. The computer program product includes computer program code. When the computer program code is run on a computer, the computer is enabled to perform the method in any one of the first aspect, the second aspect, or the third aspect, or the possible implementations of the first aspect, the second aspect, or the third aspect.

According to a seventh aspect, a communications system is provided, including a network device and a satellite.

The network device includes a first network device and/or a second network device.

### BRIEF DESCRIPTION OF DRAWINGS

FIG. 1 is a diagram of an architecture of a network system to which an embodiment of this application is applicable;
FIG. 2 is a schematic diagram in which a satellite in a satellite communications system runs;
FIG. 3 is a schematic diagram of operator information;
FIG. 4 is a schematic diagram of a procedure of updating operator information to which an embodiment of this application is applicable;
FIG. 5 is a schematic diagram of a procedure of updating operator information to which an embodiment of this application is applicable;
FIG. 6 is a schematic diagram of a procedure of updating operator information to which an embodiment of this application is applicable;
FIG. 7 is a schematic diagram of a procedure of updating operator information to which an embodiment of this application is applicable;
FIG. 8 is a schematic diagram of a procedure of updating operator information to which an embodiment of this application is applicable;
FIG. 9 is a schematic diagram of a procedure of updating operator information to which an embodiment of this application is applicable;
FIG. 10 is a schematic diagram of a procedure of updating operator information to which an embodiment of this application is applicable;
FIG. 11 is a diagram of a structure of an operator information update apparatus to which an embodiment of this application is applicable; and
FIG. 12 is a diagram of a structure of an operator information update apparatus to which an embodiment of this application is applicable.

### DESCRIPTION OF EMBODIMENTS

The following further describes the present invention in detail with reference to accompanying drawings.

This application presents all aspects, embodiments, or features by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, the term "for example" in the embodiments of this application is used to represent giving an example, an illustration, or description. Any embodiment or design described as an "example" in this application should not be explained as being more preferred or having more advantages than another embodiment or design. Exactly, the term "example" is used to present a concept in a specific manner.

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may learn that the technical solutions provided in the embodiments of this application are also applicable to a similar technical problem as the network architecture evolves and a new service scenario emerges.

The following describes some terms in the embodiments of this application, to facilitate understanding of a person skilled in the art.

(1) A network device is located in a communications system integrated with a satellite communications system, can provide a connection service for the satellite, and enables a satellite to access a core network. For example, the network device may be a network device with a satellite gateway function in the communications system, for example, a gateway (gateway) device, a ground station device, or a non-terrestrial network gateway (Non-terrestrial network Gateway, NTN Gateway)/satellite gateway.

As the satellite runs, the satellite communications system may allocate different network devices to the satellite, so that the satellite can access a network by using a nearest network device. This improves efficiency of information exchange between the network device and the satellite, ensures that the satellite can maintain a status of accessing to a network, and further ensures service continuity of the satellite. In other words, the satellite needs to perform network device switching when the satellite runs. For ease of description and differentiation, in the following embodiments of this application, a network device from which the satellite switches is referred to as a first network device or a source network device, and a network device to which the satellite is to switch or to which the satellite switches is referred to as a second network device or a target network device.

(2) A satellite is located in a satellite communications system and can provide a radio access service for a terminal in a coverage area corresponding to the satellite. When the satellite is a communications satellite in the satellite communications system, the satellite may be a geostationary orbit (geostationary earth orbit, GEO) satellite, a non-GEO satellite, or the like.

The term "and/or" in this application describes an association relationship for describing associated objects and represents that three relationships may exist. For example, A and/or B may represent the following three cases: Only A exists, both A and B exist, and only B exists. The character "/" usually indicates an "or" relationship between the associated objects.

"A plurality of' in this application means two or more.

In addition, it should be understood that in description of this application, terms such as "first" and "second" are merely used for differentiation and description, but should not be understood as an indication or implication of relative importance or an indication or implication of a sequence.

The technical solutions in the embodiments of this application may be applied to the satellite communications system, where the satellite communications system may be integrated with a conventional mobile communications system. For example, the mobile communications system may be a 4th generation (4th Generation, 4G) communications system (for example, a long term evolution (long term evolution, LTE) system), a worldwide interoperability for microwave access (worldwide interoperability for microwave access, WiMAX) communications system, a 5th generation (5th Generation, 5G) communications system (for example, a new radio (new radio, NR) system), or a future mobile communications system.

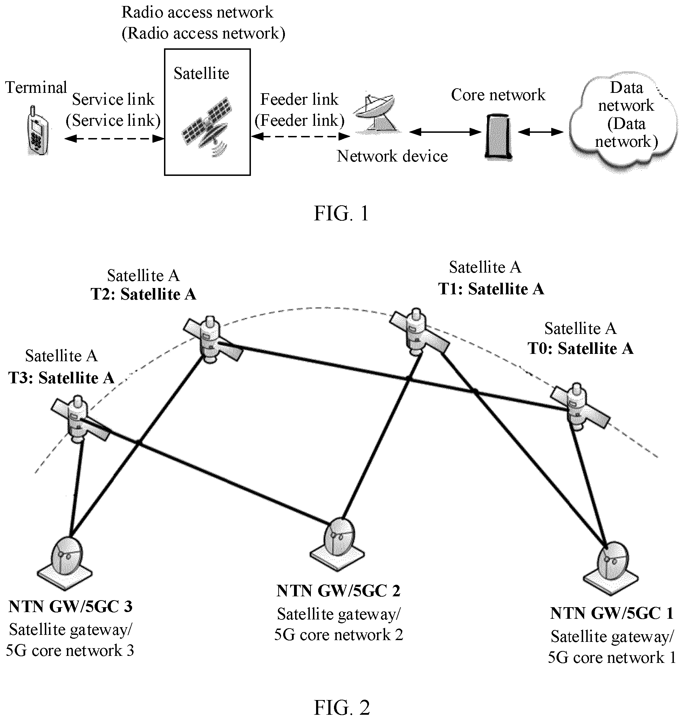

For ease of understanding of the embodiments of this application, the following describes an application scenario used in this application by using an architecture of a satellite communications system shown in FIG. 1 as an example. Refer to FIG. 1. The satellite communications system may include a data network (Data network), a core network, a network device, a satellite (Satellite), and a terminal.

When the terminal requests a service, the satellite communications system may enable the terminal to access the data network, and implement user plane data transmission between the terminal and the data network, to implement a corresponding service. In the satellite communications system, an operator network may include a satellite (optional), a network device, and a core network. For example, an operator deploys the network device and the core network. Usually, operator networks deployed by different operators are incompatible. Therefore, if the satellite switches from a network device a deployed by a first operator to a network device b deployed by a second operator, the satellite needs to access, by using the network device b, a core network deployed by the second operator.

The core network is used to enable the terminal to access the data network, manage the terminal, and carry a service. The core network serves as a bearer network to provide an interface to an external network. The core network may be connected to the satellite that serves as an access device, to implement control plane and user plane functions for the terminal that accesses the satellite. Operator information of the operator deploying the core network is configured in a core network device in the core network, where the operator information includes access information of the operator network.

A network device deployed by any operator may access the core network deployed by the operator, and the network device may obtain the operator information of the operator from the core network device in the core network. A satellite that accesses the network device and a terminal device in a coverage area of the satellite may access the operator network by using the operator information.

When the satellite enters a coverage area of a network device deployed by an operator, the satellite is connected to the network device, and accesses, by using the network device, a core network deployed by the operator, to access an operator network. The satellite has a radio access function to enable a terminal to access a core network. After obtaining the operator information from the network device, the satellite may send the operator information to the accessed terminal, so that the terminal selects a proper operator to access.

A wireless connection may be implemented between the satellite and the network device by using a feeder link (Feeder link). For example, the network device may include a satellite gateway (NTN Gateway).

As a radio access device, the satellite is a device that enables the terminal to access a wireless network in the satellite communications system. Similar to a base station in a terrestrial cellular network, the satellite may provide a radio access-related service for the terminal in the coverage area of the satellite, to implement a radio access physical layer function, resource scheduling, radio resource management, radio access control, and a mobility management function. The satellite may include a communications satellite, a positioning satellite, and the like based on function division. The satellite may implement area coverage or terrestrial coverage. This is not limited in this application. As shown in FIG. 1, a wireless connection may be implemented between the satellite and the terminal by using a service link (service link).

The terminal is a device that provides voice and/or data connectivity for a user. When the terminal is located in the coverage area of the satellite, the terminal may be connected to the satellite, to access the operator network by using the satellite. Therefore, the core network can provide a service for the terminal by using the network device and the satellite. The terminal may be connected to the data network by using the accessed operator network, to implement data communication. The terminal may also be referred to as user equipment (user equipment, UE), a mobile station (mobile station, MS), a mobile terminal (mobile terminal, MT), or the like.

For example, the terminal may be a handheld device or a vehicle-mounted device with a wireless connection function, or the like. Currently, for example, some terminal devices are a mobile phone (mobile phone), a tablet computer, a notebook computer, a palmtop computer, a mobile internet device (mobile internet device, MID), a point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart instruments (a smart water meter, a smart electricity meter, and a smart gas meter), eLTE-DSA UE, and a device having an integrated access and backhaul (integrated access and backhaul, IAB) capability.

In the satellite communications system, the satellite usually moves along an orbit and moves relative to the ground, and the network device (for example, a satellite gateway) is usually on the ground and a position remains unchanged. Therefore, the satellite communications system needs to switch to a network device that provides a connection service for the satellite, to ensure connection reliability.

A non-GEO satellite communications system is used as an example. When a satellite A moves along an orbit, an NTN GW (that is, an NTN Gateway) switching needs to be performed. As shown in FIG. 2, three NTN GWs exist in the non-GEO satellite communications system, and the NTN GWs are respectively connected to different 5G core networks (5G Core Network, 5GC/5GCN), that is, a 5GC 1, a 5GC 2, and a 5GC 3.

At a moment T0, the satellite A accesses the NTN GW/5GC 1 (that is, accessing the NTN GW that belongs to the 5GC 1).

At a moment T1, the satellite A accesses both the NTN GW/5GC 1 and the NTN GW/5GC 2.

At a moment T2, the satellite A accesses the NTN GW/5GC 3.

At a moment T3, the satellite A accesses both the NTN GW/5GC 2 and the NTN GW/5GC 3.

It can be learned that when the satellite moves along the orbit, the satellite communications system switches, based on a change of a position of the satellite relative to the Earth, to the NTN GW serving the satellite, and further switches the core network accessed by the satellite.

Currently, operators deploying a core network may be different. Therefore, when accessing a core network, the satellite needs to obtain operator information of an operator deploying the core network, and then accesses the core network (that is, an operator network) based on the operator information. Then, the satellite may notify the terminal in the coverage area of the satellite of the operator information, so that the terminal can also access the operator network based on the operator information, to implement service communication of the terminal.

Currently, in the satellite communications system, the satellite may access a core network deployed by an operator in the following two manners.

Manner 1: Operator information of the operator is preconfigured in the satellite (usually preconfigured by an operation and maintenance system of the operator), and the satellite accesses, by using the preconfigured operator information, the core network deployed by the operator.

Manner 2: When performing network device switching, the satellite needs to establish a connection to a new network device, and sends a new registration request to the network device. The network device forwards the registration request to a core network device in a core network accessed by the network device. The core network device sends operator information of the operator to the network device, and the network device returns the operator information to the satellite. Then, the satellite accesses the core network by using the received operator information. Therefore, after each time the satellite performs network device switching, the satellite needs to establish a connection to a core network accessed by a network device to which the satellite switches.

After accessing the core network, the satellite may broadcast the operator information in the coverage area of the satellite. In this way, the terminal that receives the operator information may also access the core network based on the operator information. For a specific process, refer to a process in which a terminal accesses a core network corresponding to operator information in the terrestrial cellular network.

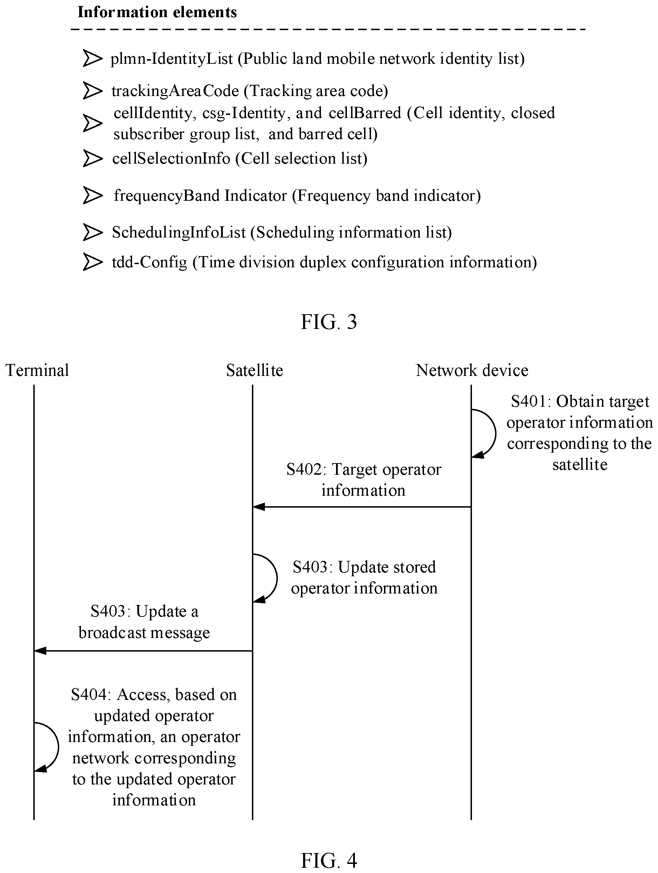

In the terrestrial cellular network, the base station broadcasts the operator information in system broadcast information, so that after receiving the broadcast operator information, the terminal accesses the core network corresponding to the operator information. As shown in FIG. 3, the operator information broadcast in the system broadcast information may include one or more of a public land mobile network (Public Land Mobile Network, PLMN) identity list (plmn-IdentityList), tracking area code (trackingAreaCode), a cell identity (cellIdentity), a closed subscriber group (Closed Subscriber Group, CSG) list (csg-Identity), a barred cell (cellBarred) (the information is used to indicate whether a cell is forbidden from accessing), a cell selection list (cellSelectionInfo), a frequency band indicator (frequency band indicator), a scheduling information list (SchedulinglnfoList), time division duplex configuration information (tdd-Config), and a value tag (valueTag).

In the satellite communications system, the satellite may perform network device switching when the satellite runs. Therefore, when the satellite stores fixed operator information, if a first core network accessed by the source network device of the satellite is different from a second core network accessed by a target network device of the satellite, the satellite cannot access the second core network because the satellite does not store operator information of an operator of the second core network. This causes communications interruption, and affects service continuity of the terminal that accesses the satellite. In addition, if the satellite needs to obtain operator information from a core network accessed by a target network device each time after the satellite performs network device switching, signaling resource consumption is relatively high, and delays in accessing the operator network by the satellite and the terminal are increased. Further, in a process in which the satellite obtains the operator information from the core network device, a connection between the satellite and the core network is also interrupted, and no core network provides a service for the satellite. Consequently, a service of the terminal that accesses the satellite is interrupted, and service continuity of the terminal is affected. In conclusion, the satellite cannot provide a service for the terminal due to a position change when the satellite runs.

In view of this, to ensure that a satellite can continuously provide a service for a terminal when the satellite runs, this application provides an operator information update method, to ensure that the satellite can obtain operator information in time when the satellite runs.

In the method, before, after or when the satellite performs network device switching, a network device in a satellite communications system may send target operator information corresponding to the satellite to the satellite in time. In this way, the satellite may update stored operator information by using the obtained target operator information, to access a new operator network in time. This ensures that a core network deployed by another operator can provide a service for the satellite in time. In the method, each time the satellite implements operator network switching by performing network device switching, the satellite can update the operator information without interacting with a new core network, and can directly implement core network switching after performing network device switching. This may reduce signaling overheads and reduce a delay in obtaining the operator information by the satellite. Therefore, the satellite can quickly access a core network (namely, the new core network) accessed by a target network device, to continuously provide a service for the terminal.

An embodiment of this application provides an operator information update method, and the method may be applied to the satellite communications system shown in FIG. 1. The following describes in detail a specific process of the operator information update method with reference to FIG. 4. As shown in FIG. 4, the process includes the following steps.

S401: A network device obtains target operator information corresponding to a satellite.

The network device may include a first network device from which the satellite switches and/or a second network device to which the satellite is to switch or to which the satellite switches.

The network device may store correspondences between a plurality of satellites and operator information. In each correspondence, the satellite may be uniquely identified by using identifier information of the satellite. In the foregoing correspondences, each satellite may correspond to one or more pieces of operator information, that is, each satellite may be provided with services by operator networks deployed by one or more operators. In addition, in the foregoing correspondences, each piece of operator information may correspond to one or more satellites. In other words, each operator (a deployed core network) may provide a service for one or more satellites. Any satellite may access an operator network by using operator information corresponding to the satellite.

Optionally, the correspondences between the plurality of satellites and the operator information may be obtained by the network device from a core network (for example, a 5GC) device, or may be obtained from another network device in a satellite communications system.

For example, when the network device that provides the service for the satellite is switched from the first network device to the second network device, the first network device may obtain the correspondences, from the second network device, between the plurality of satellites and the operator information, and the second network device may also obtain the correspondences, from the first network device, between the plurality of satellites and the operator information.

The network device may determine the target operator information corresponding to the satellite by using the correspondences, stored in the satellite, between the plurality of satellites and the operator information.

Optionally, when performing S401, the network device may determine, in the following manner, the satellite whose operator information is to be obtained.

When receiving a request message sent by the satellite, the network device obtains identifier information of the satellite from the request message. Optionally, the request message may be a handover request message of the network device.

In addition, in this embodiment of this application, the network device may obtain the target operator information corresponding to the satellite in the following cases:
1. the network device determines that the satellite is to perform network device switching;
2. the network device determines that the satellite is performing or has performed network device switching;
3. the network device periodically obtains, based on a preset interval, the target operator information corresponding to the satellite; and
4. the network device determines that a preset first time point arrives.

In this embodiment of this application, the operator information includes access information of the operator network, and may specifically include one or more of cell access information, system information scheduling information, radio resource configuration information, and cell selection and reselection information. It is clear that the operator network is deployed by the operator.

For example, the cell access information may include a public land mobile network number list, uplink and downlink spectrum resources, and the like of the operator. The satellite and a terminal that accesses the satellite may access a cell based on the cell access information, and further access the operator network.

For example, the cell selection and reselection information may include a spectrum resource of a neighboring cell deployed by the operator, for example, uplink and downlink spectrum resources of the neighboring cell. The satellite and the terminal that accesses the satellite may perform cell switching or reselection based on the cell selection and reselection information.

The satellite and the terminal that accesses the satellite may receive system information based on the system information scheduling information.

The satellite and the terminal that accesses the satellite may perform radio transmission based on the radio resource configuration information.

S402: The network device sends the target operator information corresponding to the satellite to the satellite.

In an implementation, after receiving the message that is used to request the operator information and that is sent by the satellite, the network device sends the target operator information to the satellite.

In another implementation, the network device periodically sends, based on a preset first interval, the obtained target operator information corresponding to the satellite to the satellite.

In still another implementation, the network device determines that current system time of the network device arrives at a preset second time point, and sends the obtained target operator information to the satellite.

Optionally, when performing S402, the network device may directly send the target operator information to the satellite, or forward the target operator information to the satellite by using a third-party device. For example, the third-party device may be a gateway, for example, a protocol gateway.

S403: The satellite receives the target operator information, updates the operator information stored in the satellite, and sends updated operator information to the terminal in a coverage area of the satellite by using a broadcast message.

S404: The terminal in the coverage area of the satellite receives the broadcast message sent by the satellite, and may determine, based on the updated operator information, to access an operator network corresponding to the updated operator information.

According to the solution provided in this embodiment of this application, when the satellite running in the satellite communications system performs network device switching, the network device may send the operator information to the satellite in time, to ensure that the satellite can access a new operator network based on the received new operator information. In the method, each time the satellite implements operator network switching by performing network device switching, the satellite can update the operator information without interacting with a core network in a new operator network, and can directly implement core network switching when performing network device switching. This minimizes signaling overheads. In addition, because a delay in obtaining the operator information by the satellite may be reduced in the method, that is, a delay in accessing the operator network by the satellite and the terminal that accesses the satellite is reduced, service continuity of the satellite and the terminal can further be ensured.

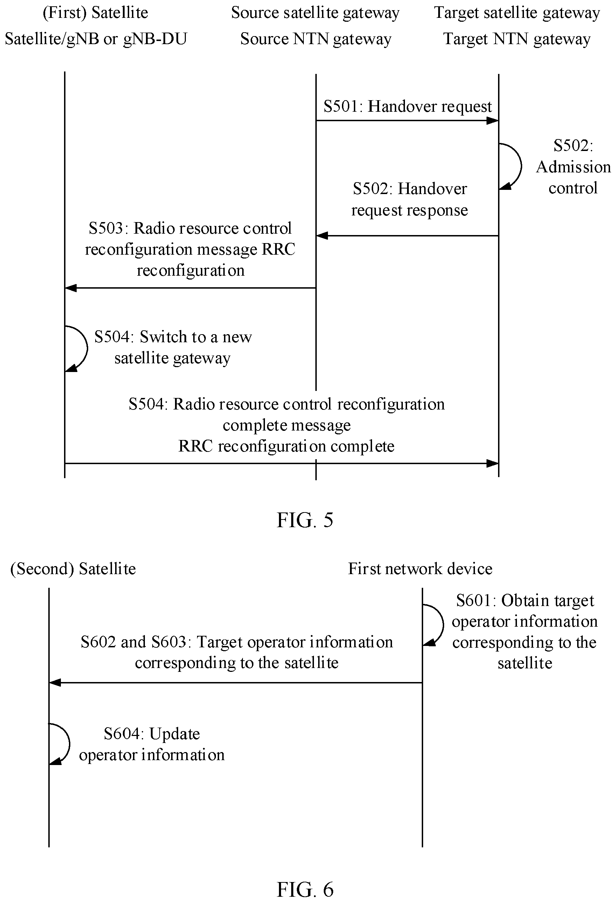

The following provides description by using an example of a process in which a satellite performs satellite gateway switching in FIG. 5. This process includes the following steps.

S501: A source satellite gateway (Source NTN Gateway) sends a handover request to a target satellite gateway (Target NTN Gateway).

In an implementation, a core network device in a core network accessed by the source satellite gateway may determine, based on preset ephemeris information and a handover plan, that a first satellite needs to switch from the source satellite gateway to the target satellite gateway, and then the core network device notifies the source satellite gateway, so that the source satellite gateway performs S501.

In another implementation, the first satellite reports a measurement event to the core network device based on a position and measurement information of the first satellite. The core network device determines, based on the measurement event, that the first satellite switches from the source satellite gateway to the target satellite gateway, and then the core network device notifies the source satellite gateway, so that the source satellite gateway performs S501.

After learning of that the first satellite is to switch from the source satellite gateway to the target satellite gateway, the source satellite gateway sends the handover request to the target satellite gateway. The handover request carries identifier information of the first satellite, so that the target satellite gateway determines that the first satellite is to perform satellite gateway switching.

The handover request is used to notify the target satellite gateway that the first satellite needs to switch to the target satellite gateway. For example, the handover request may be a HANDOVER REQUEST message, or may be a new message.

S502: The target satellite gateway receives the handover request, performs admission control (Admission Control), and returns a handover request response to the source satellite gateway.

The target satellite gateway receives the handover request sent by the source satellite gateway, and performs admission control on the first satellite, that is, the first satellite is allowed to access the target satellite gateway.

The target satellite gateway sends the handover request response to the source satellite gateway. The handover request response is a message used to respond to the handover request. For example, the handover request response may be a HANDOVER REQUEST ACK message, or may be a new message.

S503: The source satellite gateway sends a radio resource control reconfiguration (RRC Reconfiguration) message to the first satellite. The RRC reconfiguration message is used to indicate the first satellite to switch to the target satellite gateway.

S504: After receiving the RRC reconfiguration message, the first satellite switches (Switch) to a new satellite gateway (namely, the target satellite gateway), and then sends an RRC reconfiguration complete (RRC Reconfiguration Complete) message to the target satellite gateway, to implement an entire process in which the first satellite switches from the source satellite gateway to the target satellite gateway.

The RRC reconfiguration complete message is used to notify the target satellite gateway that the first satellite has accessed, and the target satellite gateway replaces the source satellite gateway to provide a service for the first satellite.

An embodiment of this application describes in detail a specific process of updating operator information of a satellite based on FIG. 4 and FIG. 5. Refer to FIG. 6. In this embodiment of this application, that a first network device sends operator information to a satellite, so that the satellite updates the operator information specifically includes the following steps.

S601: A first network device obtains target operator information corresponding to a second satellite.

For example, the first network device obtains a correspondence, from a core network device, between the second satellite and operator information, and determines the target operator information corresponding to the second satellite based on the correspondence.

The core network device may, but is not limited to, send the correspondence between the second satellite and the operator information to the first network device in the following manners:
the core network device periodically sends, based on a preset first sending interval, the correspondence between the second satellite and the operator information;
the core network device determines that current system time of the core network device arrives at a preset third time point, and sends the correspondence between the second satellite and the operator information; and
the core network device receives a request message sent by the first network device, and sends the correspondence between the second satellite and the operator information to the first network device.

It should be noted that, when sending the correspondence between the second satellite and the operator information, the core network device may further send a correspondence between another satellite and operator information at the same time, that is, the core network device sends correspondences between a plurality of satellites and operator information to the first network device, where the plurality of satellites include the second satellite.

For another example, the first network device may alternatively obtain the target operator information corresponding to the second satellite from another network device. In this embodiment of this application, the following provides description by using an example in which the another network device includes a second network device.

Optionally, before receiving the target operator information corresponding to the second satellite that is sent by the second network device, the first network device may send a first message to the second network device, where the first message is used to request the target operator information corresponding to the second satellite. For example, the first message may be a new message, or may a reused existing message. The first message may be a message carrying a new field, or may be a message carrying a reused field. For example, when the first message is a reused existing message, the first message may be a HANDOVER REQUEST message, and the HANDOVER REQUEST message carries identifier information of the second satellite.

It should be noted that, when the first message is a HANDOVER REQUEST message, the second network device may further determine that the second satellite is to perform network device switching.

The second network device may search the stored correspondences between the plurality of satellites and the operator information for the target operator information corresponding to the second satellite, and sends a message carrying the target operator information to the first network device. For example, the message carrying the target operator information may be a new message, or may a reused existing message. The message carrying the target operator information may be a message carrying a new field, or may be a message carrying a reused field. For example, when the message carrying the target operator information is a message carrying a new field, the message carrying the target operator information may be a HANDOVER REQUEST ACK message. The HANDOVER REQUEST ACK message may include a new field CN INFO used to carry the target operator information.

S602: The first network device sends the target operator information corresponding to the second satellite to the satellite.

For a process in which the first network device sends the target operator information corresponding to the second satellite to the second satellite, refer to description in S404 in the embodiment shown in FIG. 4. Details are not described herein again.

For example, the first network device may send a second message carrying the target operator information to the second satellite.

Optionally, the second message may be an existing message carrying a new field, or may be a new message (for example, a customized data transmission message). For example, when the second message is an existing message, the second message may be an RRC message or the like. If the second message is an RRC message, the RRC message may use a new field to carry the target operator information, or a field in the RRC message may be reused to carry the target operator information.

If the second message is an RRC message, the second message may be an RRC reconfiguration message. For example, the RRC reconfiguration message may use a new field Update CN INFO to carry the target operator information.

For example, before sending the target operator information to the second satellite, the first network device may send a third message to the second satellite, where the third message is used to indicate the second satellite to determine whether the operator information is updated. After receiving the third message and determining to update the operator information, the second satellite sends, to the first network device, a fourth message used to obtain the operator information. The first network device receives the fourth message, and sends the target operator information to the second satellite.

In a scenario in which operator information of a satellite does not frequently change, the satellite may store corresponding operator information sent by a network device serving the satellite last time. In this case, the operator information in the satellite does not need to be updated. Therefore, in the foregoing method, this ensures that the satellite can obtain the operator information in time, and saves network resources.

Optionally, the third message may be an existing message carrying a new field, or may be a new message (for example, a customized data transmission message). For example, when the third message is an existing message, the third message may be an RRC message or the like. If the third message is an RRC message, the RRC message may include a new field or a reused field, where the new field or the reused field is used to indicate the second satellite to determine whether the operator information is updated. If the third message is an RRC message, the third message may be an RRC reconfiguration message.

Specifically, the third message may further include version number information and/or a latest update time. The version number information is version number information of a target operator corresponding to the second satellite, and the latest update time is latest update time of the target operator information corresponding to the second satellite. The version number information and/or the latest update time may be used to notify the second satellite whether the operator information needs to be updated.

When the third message is an RRC reconfiguration message, the RRC reconfiguration message may use a new field to carry the version number information CN INFO Version of the target operator. Similarly, a new field may also be used to carry the latest update time Update Time of the target operator information.

When the third message includes the version number information and/or the latest update time, after receiving the third message, the second satellite may determine, based on the version number information and/or the latest update time, whether the operator information changes. If the second satellite determines that the operator information changes, the second satellite sends, to the first network device, a fourth message used to obtain the operator information.

S603: The second satellite receives the target operator information corresponding to the second satellite that is sent by the first network device.

Before S603, when the first network device sends the third message to the second satellite, and the third message includes the version number information of the target operator corresponding to the second satellite, after receiving the third message, the second satellite may compare the version number information of the target operator in the third message with the version number information of an operator that is stored in the second satellite. If the version number information of the target operator in the third message is consistent with the version number information of the operator that is stored in the second satellite, the second satellite determines that the operator information does not change. If the version number information of the target operator in the third message is inconsistent with the version number information of the operator that is stored in the second satellite, the second satellite determines that the operator information changes.

When the third message includes the latest update time of the target operator information, after receiving the third message, the second satellite may compare the latest update time of the target operator information in the third message with update time of the operator information that is stored in the second satellite. If the latest update time of the target operator information in the third message is consistent with the update time of the operator information that is stored in the second satellite, the second satellite determines that the operator information does not change. If the latest update time of the target operator information in the third message is inconsistent with the update time of the operator information that is stored in the second satellite, the second satellite determines that the operator information changes.

If the second satellite determines that the operator information changes, the second satellite sends, to the first network device, the fourth message used to obtain the operator information. After sending the fourth message, the second satellite receives the target operator information sent by the first network device.

S604: The satellite updates the stored operator information by using the target operator information.

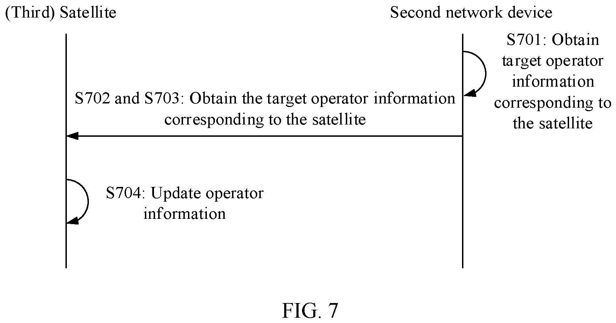

An embodiment of this application describes in detail a specific process of updating operator information of a satellite based on FIG. 4 and FIG. 5. Refer to FIG. 7. In this embodiment of this application, that a second network device sends operator information to a satellite, so that the satellite updates the operator information specifically includes the following steps.

S701: A second network device obtains target operator information corresponding to a third satellite.

In an implementation, the second network device obtains, from a core network device, a correspondence between the third satellite and operator information, to determine the target operator information corresponding to the third satellite.

For a process in which the core network device sends the correspondence between the third satellite and the operator information to the second network device, refer to description that the first network device obtains, from the core network device, the correspondence between the second satellite and the operator information in the embodiment shown in FIG. 6. Details are not described herein again.

In another implementation, the second network device may obtain, from a first network device, the correspondence between the third satellite and the operator information.

Optionally, the second network device may send the target operator information to the third satellite after the third satellite completes network device switching. Optionally, when the third satellite implements network device switching by using the network device switching process shown in FIG. 5, and the second network device receives an RRC reconfiguration complete message sent by the third satellite, the second network device determines that the third satellite switches to the second network device.

S702: The second network device sends the target operator information corresponding to the third satellite to the third satellite.

For example, the second network device may send a fifth message carrying the target operator information to the third satellite.

Optionally, the fifth message may be a new message, or may a reused existing message. The fifth message may be a message carrying a new field, or may be a message carrying a reused field.

In an implementation, before sending the target operator information to the third satellite, the second network device receives a sixth message sent by the third satellite, where the sixth message is used to request the operator information. After receiving the sixth message, the second network device sends the target operator information corresponding to the third satellite to the third satellite.

Optionally, the sixth message may be an existing message carrying a new field, or may be a new message (for example, a customized data transmission message). For example, when the sixth message is an existing message, the sixth message may be an RRC message or the like. If the sixth message is an RRC message, the RRC message may include a new field used to request the operator information, or may include a reused field used to request the operator information. If the sixth message is an RRC message, the sixth message may be an RRC reconfiguration complete message.

For example, the second network device receives a handover request, obtains identifier information of the third satellite that is carried in the handover request, and searches stored correspondences between a plurality of satellites and operator information for the target operator information corresponding to the third satellite. After allowing the third satellite to access, the second network device sends a handover request response to the first network device, and the first network device sends an RRC reconfiguration message to the third satellite. After receiving the RRC reconfiguration message, the third satellite switches to the second network device, and sends the RRC reconfiguration complete message to the second network device, where the RRC reconfiguration complete message carries a new field used to request the operator information. The second network device sends, to the third satellite, the fifth message carrying the target operator information corresponding to the third satellite, where the fifth message may be a new fifth message.

S703: The third satellite receives the target operator information corresponding to the third satellite that is sent by the second network device.

For example, the third satellite may receive the fifth message that carries the target operator information and that is sent by the second network device.

S704: The third satellite updates the stored operator information by using the target operator information.

For example, the third satellite updates, based on the target operator information carried in the fifth message, the operator information stored in the third satellite.

The following describes operator information update processes in this application by using three specific embodiments.

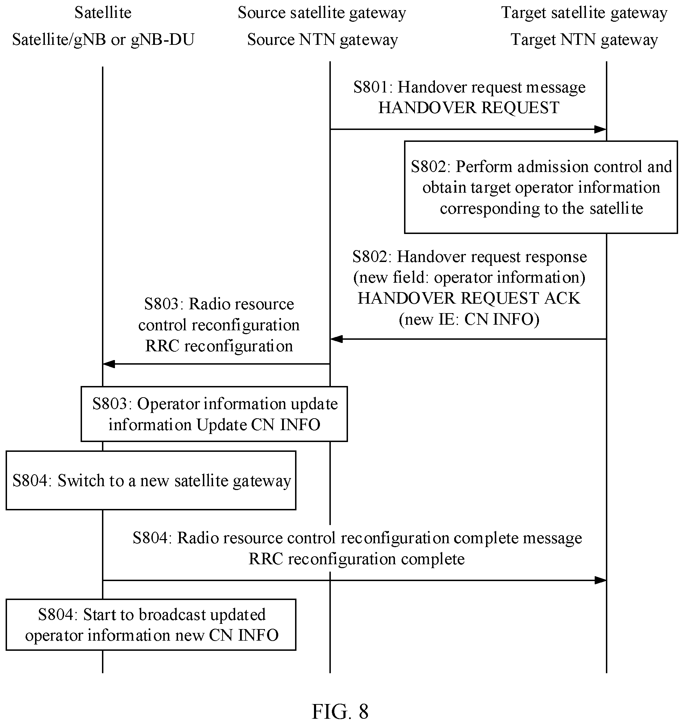

Embodiment 1: A source satellite gateway sends target operator information corresponding to a satellite to the satellite by using a new field in an existing message, and the satellite updates operator information. As shown in FIG. 8, the operator information update process includes the following steps.

S801: The source satellite gateway (Source NTN Gateway) sends a HANDOVER REQUEST message to a target satellite gateway (Target NTN Gateway).

The HANDOVER REQUEST message carries identifier information of a satellite that performs satellite gateway switching.

S802: The target NTN gateway receives the HANDOVER REQUEST message, performs admission control (Admission Control), obtains the target operator information corresponding to the satellite (Fetch CN INFO of the satellite) based on the identifier information of the satellite that is carried in the HANDOVER REQUEST message, and returns a HANDOVER REQUEST ACK message to the source NTN gateway, where the HANDOVER REQUEST ACK message includes a new field (New IE), and the new field carries the target operator information (CN INFO).

S803: After receiving the HANDOVER REQUEST ACK message, the source NTN gateway sends an RRC reconfiguration message to the satellite (a satellite/gNB or a gNB-DU), where the RRC reconfiguration message carries operator information update information (Update CN INFO).

Update CN INFO carried in the RRC reconfiguration message includes the target operator information.

S804: The satellite receives the RRC reconfiguration message, switches (Switch) to a new satellite gateway, that is, the target NTN gateway, and sends an RRC reconfiguration complete message to the target NTN gateway.

The satellite updates, based on the target operator information, the operator information stored in the satellite, and starts to broadcast updated operator information (broadcast new CN INFO) in a coverage area of the satellite.

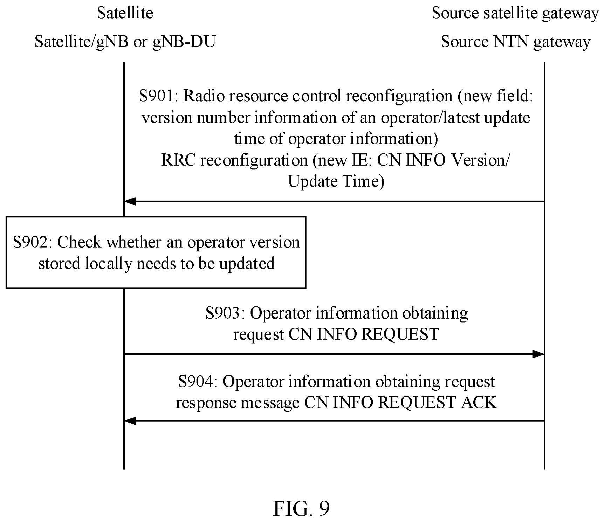

Embodiment 2: A source satellite gateway sends target operator information corresponding to a satellite to the satellite by using a new message, and the satellite updates operator information. As shown in FIG. 9, the operator information update process includes the following steps.

S901: The source NTN gateway sends an RRC reconfiguration message to the satellite (a satellite/gNB or a gNB-DU). The RRC reconfiguration message carries a new field (New IE), where the new field carries version number information CN INFO Version of a target operator and/or a latest update time Update Time of the target operator information.

S902: After receiving the RRC reconfiguration message, the satellite checks, based on the version number information of the target operator and/or the latest update time of the target operator information that are/is carried in the RRC reconfiguration message, whether an operator version stored locally needs to be updated.

The satellite locally stores version number information of an operator and/or update time of the operator information.

When locally storing the version number information of the operator, the satellite determines whether the version number information of the target operator that is carried in the RRC reconfiguration message is consistent with the locally stored version number information of the operator. If the version number information of the target operator that is carried in the RRC reconfiguration message is consistent with the locally stored version number information of the operator, the satellite determines that the operator information does not need to be updated. If the version number information of the target operator that is carried in the RRC reconfiguration message is inconsistent with the locally stored version number information of the operator, the satellite determines that the operator information needs to be updated.

When locally storing the update time of the operator information, the satellite determines whether the latest update time of the target operator information is consistent with the locally stored update time of the operator information. If the latest update time of the target operator information is consistent with the locally stored update time of the operator information, the satellite determines that the operator information does not need to be updated. If the latest update time of the target operator information is inconsistent with the locally stored update time of the operator information, the satellite determines that the operator information needs to be updated.

When locally storing the version number information of the operator and the update time of the operator information, the satellite determines whether the version number information of the target operator is consistent with the locally stored version number information of the operator, and whether the latest update time of the target operator information is consistent with the locally stored update time of the operator information. If the version number information of the target operator is consistent with the locally stored version number information of the operator, and the latest update time of the target operator information is consistent with the locally stored update time of the operator information, the satellite determines that the operator information does not need to be updated. If the version number information of the target operator is inconsistent with the locally stored version number information of the operator, or the latest update time of the target operator information is inconsistent with the locally stored update time of the operator information, the satellite determines that the operator information needs to be updated.

S903: The satellite determines that the operator information needs to be updated, and sends an operator information obtaining request (CN INFO REQUEST) message to the source NTN gateway.

Optionally, the CN INFO REQUEST message may carry identifier information of the satellite.

S904: The source NTN gateway returns an operator information obtaining request response (CN INFO REQUEST ACK) message to the satellite.

The source NTN gateway may store a correspondence between the satellite and the operator information, determines the target operator information corresponding to the satellite based on the identifier information of the satellite that is carried in the received CN INFO REQUEST message, and sends the CN INFO REQUEST ACK message carrying the target operator information to the satellite.

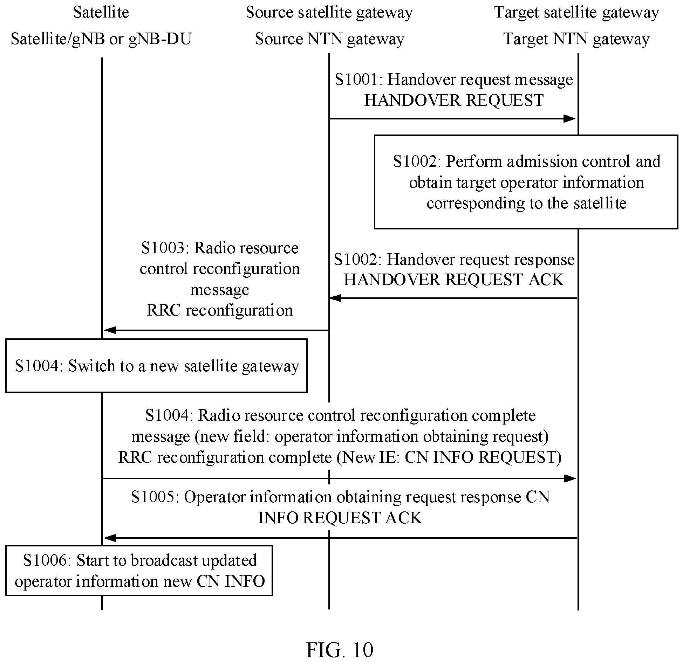

Embodiment 3: A target network device sends target operator information corresponding to a satellite to the satellite by using a new message, and the satellite updates operator information. As shown in FIG. 10, the operator information update process includes the following steps.

S1001: A source NTN gateway sends a HANDOVER REQUEST message to a target NTN gateway.

S1002: The target NTN gateway receives the HANDOVER REQUEST message, performs admission control, obtains the operation information of the satellite (Fetch CN info of the Satellite) based on identifier information of the satellite that is carried in the HANDOVER REQUEST message, and returns a HANDOVER REQUEST ACK message to the source NTN gateway.

S1003: The source NTN gateway receives the HANDOVER REQUEST ACK message, and sends an RRC reconfiguration message to the satellite.

S1004: The satellite receives the RRC reconfiguration message, switches (Switch) to a new satellite gateway, and sends an RRC reconfiguration complete message to the target satellite gateway, where the RRC reconfiguration complete message carries a new field, and the new field carries CN INFO REQUEST information.

The CN INFO REQUEST information may carry the identifier information of the satellite.

S1005: The target NTN gateway receives the RRC reconfiguration complete message, and sends a CN INFO REQUEST ACK message carrying the target operator information corresponding to the satellite to the satellite.

S1006: The satellite receives the CN INFO REQUEST ACK message, updates, based on the target operator information, the operator information stored in the satellite, and starts to broadcast updated operator information (broadcast new CN INFO) to a terminal.

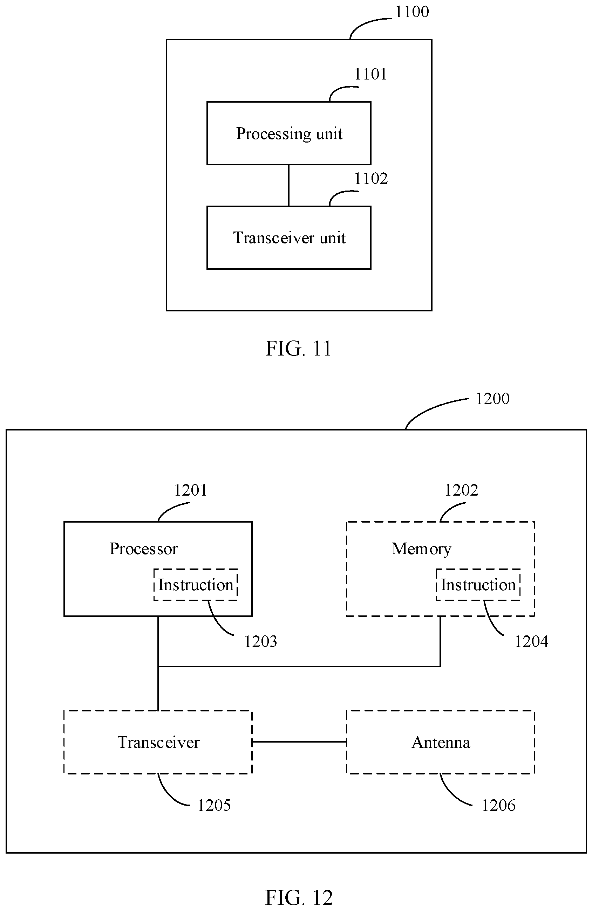

The operator information update method in the embodiments of this application is described above in detail with reference to FIG. 4 to FIG. 10. Based on a same inventive concept as the foregoing operator information update method, an embodiment of this application further provides an operator information update apparatus, as shown in FIG. 11. The operator information update apparatus 1100 includes a processing unit 1101 and a transceiver unit 1102. The apparatus 1100 may be configured to implement the method that is applied to a network device or a satellite and that is described in the foregoing method embodiments.

In an embodiment, the apparatus 1100 is applied to the network device, and the network device may be a first network device or a second network device. The first network device is a first network device from which the satellite switches, and the second network device is a second network device to which the satellite is to switch or to which the satellite switches.

Specifically, the processing unit 1101 is configured to obtain target operator information corresponding to the satellite.

The transceiver unit 1102 is configured to send the target operator information to the satellite.

In an implementation, the processing unit 1101 is specifically configured to receive, by using the transceiver unit 1102, the target operator information, corresponding to the satellite, that is sent by the second network device.

In an implementation, the transceiver unit 1102 is further configured to: before receiving the target operator information, corresponding to the satellite, that is sent by the second network device, send a first message to the second network device, where the first message carries identifier information of the satellite, and is used to request the target operator information corresponding to the satellite.

In an implementation, the transceiver unit 1102 is specifically configured to send a second message carrying the target operator information to the satellite.

In an implementation, the second message is a radio resource control RRC message, or the second message is a new message.

In an implementation, the transceiver unit 1102 is further configured to: before sending the target operator information to the satellite, send a third message to the satellite, where the third message is used to indicate the satellite to determine whether operator information is updated; and receive a fourth message that is used to obtain the operator information and that is sent by the satellite.

In an implementation, the third message includes version number information of a target operator corresponding to the satellite and/or a latest update time of the target operator information.

In an implementation, the processing unit 1101 is specifically configured to receive, by using the transceiver unit 1102, a correspondence, sent by a core network device, between operator information and identifier information of the satellite; and search, for the target operator information corresponding to the satellite, the correspondence between the operator information and the identifier information of the satellite.

In an implementation, the transceiver unit 1102 is specifically configured to send a fifth message carrying the target operator information to the satellite.

In an implementation, the transceiver unit 1102 is further configured to: before sending the target operator information to the satellite, receive a sixth message sent by the satellite, where the sixth message is used to request the operator information.

In an implementation, the operator information includes one or more of cell access information, system information scheduling information, radio resource configuration information, and cell selection and reselection information.

In another embodiment, the apparatus 1100 is applied to the satellite.

Specifically, the transceiver unit 1102 is configured to receive target operator information, corresponding to the satellite, that is sent by a network device.

The processing unit 1101 is configured to update stored operator information by using the target operator information.

In an implementation, the network device includes a first network device and/or a second network device, the first network device is a first network device from which the satellite switches, and the second network device is a second network device to which the satellite is to switch or to which the satellite switches.

In an implementation, the transceiver unit 1102 is specifically configured to receive a second message that carries the target operator information and that is sent by the first network device.

In an implementation, the second message is an RRC message, or the second message is a new message.

In an implementation, the transceiver unit 1102 is further configured to: before receiving the target operator information, corresponding to the satellite, that is sent by the network device, receive a third message sent by the first network device, where the third message is used to indicate the satellite to determine whether operator information is updated.

The processing unit 1101 is further configured to determine, based on the third message, to update the operator information.

The transceiver unit 1102 is further configured to send, to the first network device, a fourth message used to obtain the operator information.

In an implementation, the third message includes version number information of a target operator corresponding to the satellite and/or a latest update time of the target operator information.

The processing unit 1101 is specifically configured to determine, based on the version number information of the target operator corresponding to the satellite and/or the latest update time of the target operator information, that the version number information of the target operator corresponding to the satellite and/or the latest update time of the target operator information are/is inconsistent with version number information of an operator and/or update time of operator information that are/is stored in the satellite.

In an implementation, the transceiver unit 1102 is specifically configured to receive a fifth message that carries the target operator information and that is sent by the second network device.

In an implementation, the transceiver unit 1102 is further configured to: before receiving the target operator information, corresponding to the satellite, that is sent by the network device, send a sixth message to the second network device, where the sixth message is used to request the operator information.

In an implementation, the operator information includes one or more of cell access information, system information scheduling information, radio resource configuration information, and cell selection and reselection information.

It should be noted that in the embodiments of this application, division into the modules is an example and is merely logical function division, and may be other division in an actual implementation. In addition, functional units in the embodiments of this application may be integrated into one processing unit, or may exist alone physically, or two or more units may be integrated into one unit. The integrated unit may be implemented in a form of hardware, or may be implemented in a form of a software function unit.

When the integrated unit is implemented in the form of a software function unit and is sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: various media that can store program code, such as a USB flash drive, a removable hard disk drive, a read-only memory (Read-Only Memory, ROM), a random access memory (Random Access Memory, RAM), a magnetic disk, and an optical disc.

Based on a same conception as the foregoing operator information update method, as shown in FIG. 12, an embodiment of this application further provides a schematic diagram of a structure of an operator information update apparatus 1200. The apparatus 1200 may be configured to implement the method that is applied to a network device or a satellite and that is described in the foregoing method embodiments, where the network device includes a first network device and/or a second network device. For details, refer to description in the foregoing method embodiments. The apparatus 1200 may be located in the network device or the satellite or may be a network device or a satellite.

The apparatus 1200 includes one or more processors 1201. The processor 1201 may be a general-purpose processor, a dedicated processor, or the like. For example, the processor 1201 may be a baseband processor or a central processing unit. The baseband processor may be configured to process a communications protocol and communications data. The central processing unit may be configured to control a communications apparatus (for example, a base station, a terminal, or a chip), execute a software program, and process data of the software program. The communications apparatus may include a transceiver unit, configured to input (receive) and output (send) signals. For example, the transceiver unit may be a transceiver, a radio frequency chip, or the like.

The apparatus 1200 includes one or more processors 1201. The one or more processors 1201 may implement the method performed by the network device or the satellite in the foregoing embodiments.

Optionally, in addition to implementing the method in the foregoing embodiments, the processor 1201 may further implement another function.

Optionally, in a design, the processor 1201 may execute instructions, so that the apparatus 1200 performs the method described in the foregoing method embodiments. The instructions may be all or partially stored in the processor, for example, an instruction 1203, or may be all or partially stored in a memory 1202 coupled to the processor, for example, an instruction 1204. Alternatively, the instruction 1203 and the instruction 1204 may jointly be used to enable the apparatus 1200 to perform the method described in the foregoing method embodiments.

In still another possible design, the apparatus 1200 may further include a circuit. The circuit may implement a function of the network device or the satellite in the foregoing method embodiments.

In still another possible design, the apparatus 1200 may include one or more memories 1202. The memory 1202 stores the instruction 1204. The instruction may be run by the processor, so that the apparatus 1200 performs the method described in the foregoing method embodiments. Optionally, the memory may further store data. Optionally, the processor may alternatively store instructions and/or data. For example, the one or more memories 1202 may store the correspondence described in the foregoing embodiments, or related parameters, tables, or the like in the foregoing embodiments. The processor and the memory may be separately disposed, or may be integrated together.

In still another possible design, the apparatus 1200 may further include a transceiver 1205 and an antenna 1206. The processor 1201 may be referred to as a processing unit and control an apparatus (a terminal or a base station). The transceiver 1205 may be referred to as a transceiver machine, a transceiver circuit, a transceiver unit, or the like, and is configured to implement a transceiver function of the apparatus by using the antenna 1206.

It should be noted that, the processor in the embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly performed and accomplished by a hardware decoding processor, or may be performed and accomplished by a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories in the systems and the methods described in this specification include but are not limited to these memories and any memory of another suitable type.

An embodiment of this application further provides a computer-readable medium. The computer-readable medium stores a computer program. When the computer program is executed by a computer, the operator information update method that is applied to the network device or the satellite and that is described in any one of the foregoing method embodiments is implemented.

An embodiment of this application further provides a computer program product. When the computer program product is executed by a computer, the operator information update method that is applied to the network device or the satellite and that is described in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid-State Drive, SSD)), or the like.

An embodiment of this application further provides a processing apparatus, including a processor and an interface. The processor is configured to perform the operator information update method that is applied to the network device or the satellite and that is described in any one of the foregoing method embodiments.

It should be understood that the processing apparatus may be a chip. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor. The general-purpose processor is implemented by reading software code stored in a memory. The memory may be integrated into the processor, or may be located outside the processor and exist independently.

A person of ordinary skill in the art may be aware that, in combination with the embodiments disclosed in this specification, units and algorithm steps in the examples can be implemented by electronic hardware, computer software, or a combination thereof. To clearly describe the interchangeability between hardware and software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in another manner. For example, the foregoing apparatus embodiment is only an example. For example, division into the units is only a type of division of logical functions, and may be another manner of division in an actual implementation. For example, a plurality of units or components may be combined or integrated into another system, or some features may be ignored or may not be performed. In addition, the displayed or discussed mutual couplings or direct couplings or communications connections may be implemented through some interfaces. The indirect couplings or the communications connections between the apparatuses or the units may be implemented in an electrical form, a mechanical form, or another form.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions in the embodiments of this application.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

With description of the foregoing implementations, a person skilled in the art may clearly understand that this application may be implemented by using hardware, firmware, or a combination thereof. When this application is implemented by using the software, the foregoing functions may be stored in a computer-readable medium or transmitted as one or more instructions or code in the computer-readable medium. The computer-readable medium includes a computer storage medium and a communications medium. The communications medium includes any medium that facilitates transmission of a computer program from one place to another. The storage medium may be any available medium accessible by a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can carry or store expected program code in a form of instructions or a data structure and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio, and microwave are included in a definition of a medium to which they belong. A disk (Disk) and a disc (disc) used in this application include a compact disc (CD), a laser disc, an optical disc, a digital versatile disc (DVD), a floppy disk, and a Blu-ray disc. The disk usually copies data in a magnetic manner, whereas the disc copies data optically through a laser. The foregoing combination should also be included in the protection scope of the computer-readable medium.

In conclusion, the foregoing description is merely an example embodiment of the technical solutions in this application, but are not intended to limit the protection scope of this application. Any modification, equivalent replacement, or improvement made without departing from the spirit and principle of this application shall fall within the protection scope of this application.

## Claims

1. An operator information update method, comprising:
obtaining, by a network device, target operator information corresponding to a satellite; and
sending, by the network device, the target operator information to the satellite.

2. The method according to claim 1, wherein the network device comprises a first network device and/or a second network device, the first network device is a first network device from which the satellite switches, and the second network device is a second network device to which the satellite is to switch or to which the satellite switches.

3. The method according to claim 2, wherein the obtaining, by a network device, target operator information corresponding to a satellite comprises:
receiving, by the first network device, the target operator information, corresponding to the satellite, that is sent by the second network device.

4. The method according to claim 3, wherein before the receiving, by the first network device, the target operator information, corresponding to the satellite, that is sent by the second network device, the method further comprises:
sending, by the first network device, a first message to the second network device, wherein the first message carries identifier information of the satellite, and is used to request the target operator information corresponding to the satellite.

5. The method according to claim 2 or 3, wherein the sending, by the network device, the target operator information to the satellite comprises:
sending a second message carrying the target operator information to the satellite.

6. The method according to claim 5, wherein the second message is a radio resource control RRC message, or the second message is a new message.

7. The method according to claim 5 or 6, wherein before the sending, by the network device, the target operator information to the satellite, the method further comprises:
sending a third message to the satellite, wherein the third message is used to indicate the satellite to determine whether operator information is updated; and
receiving a fourth message that is sent by the satellite and that is used to obtain the operator information.

8. The method according to claim 7, wherein the third message comprises version number information of a target operator corresponding to the satellite and/or a latest update time of the target operator information.

9. The method according to claim 2, wherein the obtaining, by a network device, target operator information corresponding to a satellite comprises:
receiving, by the second network device, a correspondence, sent by a core network device, between operator information and identifier information of the satellite; and
searching, for the target operator information corresponding to the satellite, the correspondence between the operator information and the identifier information of the satellite.

10. The method according to claim 9, wherein the sending, by the network device, the target operator information to the satellite comprises:
sending a fifth message carrying the target operator information to the satellite.

11. The method according to claim 9 or 10, wherein before the sending, by the network device, the target operator information to the satellite, the method further comprises:
receiving a sixth message sent by the satellite, wherein the sixth message is used to request the operator information.

12. The method according to any one of claims 1 to 11, wherein the operator information comprises one or more of cell access information, system information scheduling information, radio resource configuration information, and cell selection and reselection information.

13. An operator information update method, comprising:
receiving, by a satellite, target operator information, corresponding to the satellite, that is sent by a network device; and
updating, by the satellite, stored operator information by using the target operator information.

14. The method according to claim 13, wherein the network device comprises a first network device and/or a second network device, the first network device is a first network device from which the satellite switches, and the second network device is a second network device to which the satellite is to switch or to which the satellite switches.

15. The method according to claim 14, wherein the receiving, by a satellite, target operator information, corresponding to the satellite, that is sent by a network device comprises:
receiving a second message that carries the target operator information and that is sent by the first network device.

16. The method according to claim 15, wherein the second message is a radio resource control RRC message, or the second message is a new message.

17. The method according to claim 15 or 16, wherein before the receiving, by a satellite, target operator information, corresponding to the satellite, that is sent by a network device, the method further comprises:
receiving, by the satellite, a third message sent by the first network device, wherein the third message is used to indicate the satellite to determine whether operator information is updated; and
determining, based on the third message, to update the operator information, and sending, to the first network device, a fourth message used to obtain the operator information.

18. The method according to claim 17, wherein the third message comprises version number information of a target operator corresponding to the satellite and/or a latest update time of the target operator information, and the determining, based on the third message, to update the operator information comprises:
determining, based on the version number information of the target operator corresponding to the satellite and/or the latest update time of the target operator information, that the version number information of the target operator corresponding to the satellite and/or the latest update time of the target operator information are/is inconsistent with version number information of an operator and/or update time of operator information that are/is stored in the satellite.

19. The method according to claim 14, wherein the receiving, by a satellite, target operator information, corresponding to the satellite, that is sent by a network device comprises:
receiving a fifth message that carries the target operator information and that is sent by the second network device.

20. The method according to claim 19, wherein before the receiving, by a satellite, target operator information, corresponding to the satellite, that is sent by a network device, the method further comprises:
sending a sixth message to the second network device, wherein the sixth message is used to request the operator information.

21. The method according to any one of claims 13 to 20, wherein the operator information comprises one or more of cell access information, system information scheduling information, radio resource configuration information, and cell selection and reselection information.

22. An operator information update apparatus, comprising:
a processing unit, configured to obtain target operator information corresponding to a satellite; and
a transceiver unit, configured to send the target operator information to the satellite.

23. The apparatus according to claim 22, wherein that the processing unit is configured to obtain the target operator information corresponding to the satellite comprises:
the processing unit is specifically configured to receive, by using the transceiver unit, the target operator information, corresponding to the satellite, that is sent by a second network device.

24. The apparatus according to claim 23, wherein the transceiver unit is further configured to: before receiving the target operator information, corresponding to the satellite, that is sent by the second network device, send a first message to the second network device, wherein the first message carries identifier information of the satellite, and is used to request the target operator information corresponding to the satellite.

25. The apparatus according to claim 22 or 23, wherein that the transceiver unit is configured to send the target operator information to the satellite comprises:
the transceiver unit is specifically configured to send a second message carrying the target operator information to the satellite.

26. The apparatus according to claim 25, wherein the second message is a radio resource control RRC message, or the second message is a new message.

27. The apparatus according to claim 25 or 26, wherein the transceiver unit is further configured to: before sending the target operator information to the satellite, send a third message to the satellite, wherein the third message is used to indicate the satellite to determine whether operator information is updated; and receive a fourth message that is used to obtain the operator information and that is sent by the satellite.

28. The apparatus according to claim 27, wherein the third message comprises version number information of a target operator corresponding to the satellite and/or a latest update time of the target operator information.

29. The apparatus according to claim 22, wherein the processing unit is specifically configured to receive, by using the transceiver unit, a correspondence, sent by a core network device, between operator information and identifier information of the satellite; and search, for the target operator information corresponding to the satellite, the correspondence between the operator information and the identifier information of the satellite.

30. The apparatus according to claim 29, wherein the transceiver unit is specifically configured to send a fifth message carrying the target operator information to the satellite.

31. The apparatus according to claim 29 or 30, wherein the transceiver unit is further configured to: before sending the target operator information to the satellite, receive a sixth message sent by the satellite, wherein the sixth message is used to request the operator information.

32. The apparatus according to any one of claims 22 to 31, wherein the operator information comprises one or more of cell access information, system information scheduling information, radio resource configuration information, and cell selection and reselection information.

33. An operator information update apparatus, comprising:
a transceiver unit, configured to receive target operator information, corresponding to a satellite, that is sent by a network device; and
a processing unit, configured to update stored operator information by using the target operator information.

34. The apparatus according to claim 33, wherein the network device comprises a first network device and/or a second network device, the first network device is a first network device from which the satellite switches, and the second network device is a second network device to which the satellite is to switch or to which the satellite switches.

35. The apparatus according to claim 34, wherein the transceiver unit is specifically configured to receive a second message that carries the target operator information and that is sent by the first network device.

36. The apparatus according to claim 35, wherein the second message is a radio resource control RRC message, or the second message is a new message.

37. The apparatus according to claim 35 or 36, wherein the transceiver unit is further configured to: before receiving the target operator information, corresponding to the satellite, that is sent by the network device, receive a third message sent by the first network device, wherein the third message is used to indicate the satellite to determine whether operator information is updated;
the processing unit is further configured to determine, based on the third message, to update the operator information; and
the transceiver unit is further configured to send, to the first network device, a fourth message used to obtain the operator information.

38. The apparatus according to claim 37, wherein the third message comprises version number information of a target operator corresponding to the satellite and/or a latest update time of the target operator information; and
the processing unit is specifically configured to determine, based on the version number information of the target operator corresponding to the satellite and/or the latest update time of the target operator information, that the version number information of the target operator corresponding to the satellite and/or the latest update time of the target operator information are/is inconsistent with version number information of an operator and/or update time of operator information that are/is stored in the satellite.

39. The apparatus according to claim 34, wherein the transceiver unit is specifically configured to receive a fifth message that carries the target operator information and that is sent by the second network device.

40. The apparatus according to claim 39, wherein the transceiver unit is further configured to: before receiving the target operator information, corresponding to the satellite, that is sent by the network device, send a sixth message to the second network device, wherein the sixth message is used to request the operator information.

41. The apparatus according to any one of claims 33 to 40, wherein the operator information comprises one or more of cell access information, system information scheduling information, radio resource configuration information, and cell selection and reselection information.

42. An operator information update apparatus, comprising a processor and a memory, wherein the processor is coupled to the memory;
the memory is configured to store a computer program; and
the processor is configured to execute the computer program stored in the memory, to enable the apparatus to perform the method according to any one of claims 1 to 21.

43. A computer-readable storage medium comprising a program or instructions, wherein when the program or the instructions is/are run on a computer, the method according to any one of claims 1 to 21 is performed.

44. A computer program product comprising a program or instructions, wherein when the program or the instructions is/are run on a computer, the method according to any one of claims 1 to 21 is performed.

45. A chip, wherein the chip is coupled to a memory, and is configured to read and execute program instructions stored in the memory, to perform the method according to any one of claims 1 to 21.
